# EUROPÄISCHE PATENTANMELDUNG

(11) **EP 0 990 508 A2**
(43) Veröffentlichungstag der Anmeldung: **05.04.2000**
(21) Anmeldenummer: 99118710.5
(22) Anmeldetag: 22.09.1999
(51) Int. Cl.: B29C 70/88, B29C 71/00, B29K 21/00, B29K 75/00, B29K 507/04

(54) **Herstellungsverfahren für einen elektrostatisch leitfähigen Belag sowie danach hergestellter Belag**

(30) Priorität: 03.10.1998 DE 19845410
(71) Anmelder: Eltex-Elektrostatik Gesellschaft mbH, D-79576 Weil am Rhein (DE)
(72) Erfinder: KÜNZIG Herrmann, D-79575 WEIL AM RHEIN (DE); PRASSE Torsten, D-21701 HAMBURG (DE)
(74) Vertreter: Säger, Manfred

(57) **Zusammenfassung**

Die vorliegende Erfindung betrifft ein Verfahren zum Herstellen eines Belags in Form von Platten, Walzen, Hohlzylindern, Bändern wie Transportbändern oder dergleichen aus einer Masse, die vorwiegend ein Gießharz, beispielsweise Polyurethan (PU), oder Gummi mit homogen zugemischtem Ruß aufweist, wobei der Masse in ihrem forminstabilen Rohzustand Ruß homogen zugemischt wird und die Masse danach in den formstabilen Endzustand mit gewünschter Endform, beispielsweise durch Aushärten oder Vulkanisieren bzw. nach dem Kalandrieren von Kautschuk, gebracht wird, wobei die Masse (9) in ihrem forminstabilen Rohzustand in ihre gewünschte Endform gebracht wird und wobei danach sowie während des Aushärtens oder Vulkanisierens ein elektrisches Feld mit einer elektrischen Gleichspannung (U) in der gewünschten Raumvorzugsrichtung angelegt wird.

Die vorliegende Erfindung betrifft des weiteren einen elektrostatisch leitfähigen Belag (9).

## Beschreibung

Die vorliegende Erfindung betrifft ein Verfahren zum Herstellen eines Belags in Form von Platten, Walzen, Hohlzylindern, Bändern wie Transportbändern oder dergleichen aus einer Masse, die vorwiegend ein Gießharz, beispielsweise Polyurethan (PU), oder Gummi mit homogen zugemischtem Ruß aufweist, wobei der Masse in ihrem forminstabilen Rohzustand Ruß homogen zugemischt wird und die Masse danach in den formstabilen Endzustand mit gewünschter Endform, beispielsweise durch Aushärten oder Vulkanisieren bzw. nach dem Kalandrieren von Kautschuk, gebracht wird.

Diese Masse zeichnet sich im reinen Zustand durch ihre elektrische Hochohmigkeit aus, die für den Einsatz von Isolatoren in der Elektrotechnik willkommen ist. Andererseits wirkt diese Hochohmigkeit bei bestimmten Anwendungsfällen wegen der elektrostatischen Aufladbarkeit der Oberflächen störend. Unter einem Gießharz versteht man in diesem Zusammenhang ein im Regelfall lösungsmittelfreies, flüssiges oder durch mäßiges Erwärmen verflüssigtes Reaktionsharz, das ohne Druckanwendung in offene Formen gegossen werden kann und darin erstarrt die Formkörper ergibt.

Für bestimmte Anwendungstechniken werden im Sinne der Elektrostatik leitfähige Kunststoffe benötigt. Unter elektrostatisch leitfähig versteht man Oberflächen bzw. Ableitwiderstände in der Grössenordnung von etwa 10⁶ Ω bis etwa 10⁸ Ω bzw. nichtaufladbar von etwa 10⁹ Ω bis etwa 10¹⁰ Ω. Das bekannte Verfahren, die hochohmige Masse elektrostatisch leitfähig zu machen, besteht in der Beigabe von leitfähigen Substanzen wie Ruß, Graphit, Kupfer, Kohlefasern etc. Je nach Menge der Zugabe und der Mischzeit wird die hochohmige Masse mehr oder weniger leitfähig. Es müssen mehr als zehn Prozent Zugaben eingesetzt werden, um die Leitfähigkeit von Kunststoffen zu beeinflussen.

Nachteilig bei diesem bekannten Verfahren ist jedoch die Tatsache, daß sich bei Zugaben von größer als zehn Prozent nicht nur die chemischen, sondern auch die physikalischen Eigenschaften der Masse ändern. Außerdem kann bei Zugaben dieser Größenordnung kein reproduzierbarer Widerstandswert der Masse erreicht werden. Die Schwankungen aus einer Rezeptur von ein-und derselben Fertigung können bis zu drei Größenordnungen, das heißt bis zu drei Zehnerpotenzen ausmachen, obwohl die Mischer sehr genau arbeiten und die Aushärtungs- bzw. Vulkanisierungsparameter genauestens eingehalten werden.

Für elektrostatische Nutzanwendungen wie elektrostatische Druckunterstützung, Kontaktaufladungen von Oberflächen etc werden im Sinne der Elektrostatik leitfähige Presseure (Walzen) bzw. Kontaktplatten benötigt, die aus hochohmiger Masse hergestellt werden, wobei die Rezeptur durch entsprechende Zugaben so abgestimmt werden muss, daß die Leitfähigkeit zwischen etwa 10⁶ Ω und etwa 10⁹ Ω liegt. Bislang war dies nur unter extrem großem Ausschuß möglich.

Der Erfindung liegt deshalb die Aufgabe zugrunde, ein Verfahren der gattungsgemäßen Art vorzuschlagen, mit dem ohne Änderung der chemischen sowie der physikalischen Grundeigenschaften der Masse die elektrischen Leitfähigkeitstoleranzen beträchtlich verringert werden können.

Diese Aufgabe wird bei einem gattungsgemäßen Verfahren gemäß dem Oberbegriff des Hauptanspruchs erfindungsgemäß durch dessen kennzeichnende Merkmale gelöst. Mit dem erfindungsgemäßen Verfahren wird mithin zunächst die vorzugsweise ein Gießharz bildende Masse, die den homogen zugemischten Ruß aufweist, in ihrem forminstabilen Rohzustand in ihre gewünschte Endform gebracht und danach ein elektrisches Feld mit einer elektrischen Gleichspannung in der gewünschten Raumvorzugsrichtung während des Aushärtens oder Vulkanisierens nach dem Kalandrieren von Kautschuk angelegt.

In Abhängigkeit von der Zeit, von der elektrischen Feldstärke, von der Viskosität und von der prozentualen Beigabe von Ruß kann der erforderliche Widerstand in der Aushärtungsphase vor Erreichen des formstabilen Endzustands der Masse eingestellt werden, so daß nach Abschluß des Aushärtungsprozesses der erreichte Widerstandswert gewissermassen eingefroren ist.

Um möglichst geringfügige Veränderungen der chemischen und der physikalischen Eigenschaften des nach dem erfindungsgemäßen Verfahren hergestellten Belags zu erreichen, wird vorzugsweise Ruß in einem Prozentsatz von kleiner als zehn Prozent, vorzugsweise von kleiner als vier Prozent und mit besonderem Vorteil von kleiner als zwei Prozent beigemischt.

Somit zeichnet sich ein erfindungsgemäß hergestellter elektrostatisch einsetzbarer Belag mit hohem Widerstandswert dadurch aus, daß Ruß in einer Menge von unter zehn Gewichtsprozent eingesetzt wird, so daß insgesamt keine Änderung oder Einbußen von chemischen oder von physikalischen Eigenschaften der Masse zu befürchten sind.

Mit ganz besonderem Vorteil weist der erfindungsgemäße, elektrostatisch leitfähige Belag eine Raumvorzugsrichtung auf, in der der elektrische Leitwert um etwa den Faktor 10 bis 10⁴ größer als in einer quer, vorzugsweise senkrecht dazu verlaufenden Raumrichtung ist, wodurch sich interessante, vielfältige neue Anwendungsmöglichkeiten ergeben.

Weitere zweckmäßige Ausgestaltungen und Weiterbildungen der Erfindung sind in den Unteransprüchen gekennzeichnet.

Ein Ausführungsbeispiel für den elektrostatisch leitfähigen Belag bei einem Presseur ist in der Zeichnung dargestellt.

In dieser zeigt:
- Figur 1: den Presseur, im schematischen Querschnitt; und
- Figur 2: einen Schnitt II - II gemäß Figur 1.

Der insgesamt mit 5 bezeichnete Presseur weist einen Stahlkern 6 sowie eine darauf aufgebrachte konzentrische elektrische Isolierschicht 7 auf. Auf deren Mantel ist eine leitfähige Schicht 8 aufgebracht, auf die der erfindungsgemäße Belag 9 aufgebracht ist.

Hierbei liegt der Presseur 5 mit Ausnahme der Schicht 9 als halbfertiges Produkt vor. Dann wird der Belag in seinem forminstabilen Zustand in Form der Gummimasse, der homogen Ruß in einem Verhältnis von kleiner als zehn Gewichtsprozent beigemischt ist, aufgebracht. Diese Gummimasse kommt nach dem Kalandrieren knetartig aus dem Kalander. Im Kalandrierverfahren wird die Rezeptur gemischt und ist hochohmig; die Masse 9 wird auf die Oberfläche der leitfähigen Schicht 8 aufgebracht. Dann wird ein äußerer Metallmantel beispielsweise in Form von zwei Halbschalen 10 auf der Masse aufgebracht und auf Vulkanisationstemperatur gebracht.

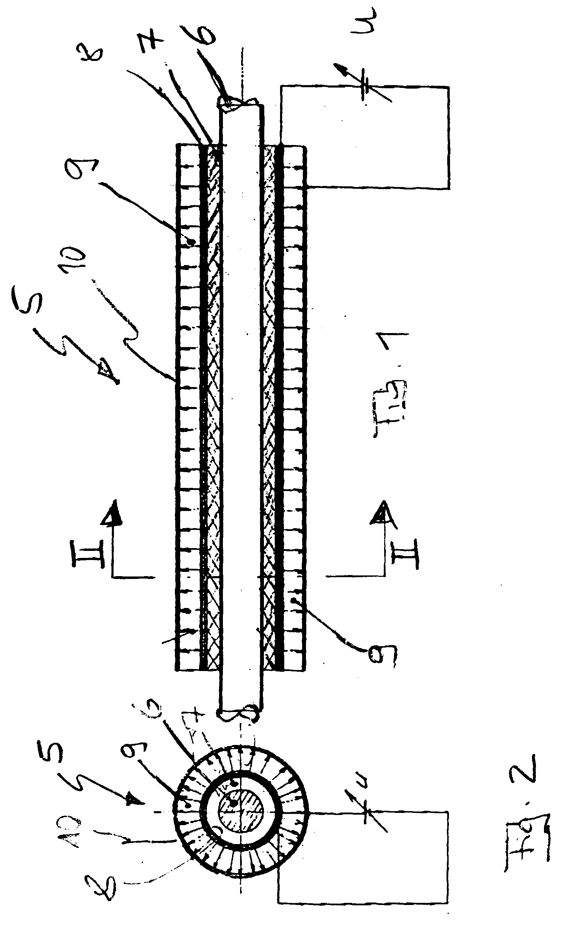

Danach wird eine elektrische Spannung U (vgl. Figuren 1 und 2), die in ihrer Größe zwischen zehn Volt und einigen 1000 Volt einstellbar ist, an die elektrisch leitfähige Schicht 8 sowie an den äußeren Metallmantel 10 in Form der beiden Halbschalen angelegt, und zwar während des forminstabilen Zustands der Masse 9 und während des gesamten Aushärtens, wobei dieses Einstellen in Abhängigkeit der Temperatur bzw. der Viskosität der knetartigen Masse 9, des Anteils an Ruß und der gewünschten elektrischen Leitfähigkeit in Richtung des elektrischen Feldes zwischen dem leitfähigen Belag 8 und den beiden Halbschalen 10 erfolgt. Vorzugsweise liegt hierbei die Anode der Spannungsquelle am leitfähigen Belag 8 und die Kathode an den beiden Halbschalen 10. Nach Abschluß des Aushärtungsprozesses ist der erreichte Widerstandswert gewissermassen eingefroren. Danach kann die Spannung weggenommen werden, und die beiden Halbschalen 10 können entfernt werden.

## Patentansprüche

1. Verfahren zum Herstellen eines Belags in Form von Platten, Walzen, Hohlzylindern, Bändern wie Transportbändern oder dergleichen aus einer Masse, die vorwiegend ein Gießharz, beispielsweise Polyurethan (PU), oder Gummi mit homogen zugemischtem Ruß aufweist, wobei der Masse in ihrem forminstabilen Rohzustand Ruß homogen zugemischt wird und die Masse danach in den formstabilen Endzustand mit gewünschter Endform, beispielsweise durch Aushärten oder Vulkanisieren bzw. nach dem Kalandrieren von Kautschuk, gebracht wird,
**dadurch gekennzeichnet,**
daß die Masse in ihrem forminstabilen Rohzustand in ihre gewünschte Endform gebracht wird und daß danach sowie während des Aushärtens oder Vulkanisierens ein elektrisches Feld mit einer elektrischen Gleichspannung (U) in der gewünschten Raumvorzugsrichtung angelegt wird.

2. Verfahren gemäß Anspruch 1, dadurch gekennzeichnet, daß die elektrische Gleichspannung (U) bis zum Erreichen des formstabilen Endzustands der Masse als elektrostatisch leitfähiger Belag in Form von Platten oder Walzen in Abhängigkeit verschiedener meßbarer Parameter (wie etwa Aushärt- oder Vulkanisationstemperatur, Viskosität, Menge an zugemischtem Ruß) geändert wird.

3. Verfahren gemäß Anspruch 2, dadurch gekennzeichnet, daß als Parameter die Zeit, die elektrische Feldstärke und/oder die Viskosität sowie die Temperatur der Masse gemessen werden.

4. Verfahren gemäß mindestens einem der Ansprüche 1 bis 3, dadurch gekennzeichnet, daß der Ruß der Masse in einem Verhältnis von maximal etwa zehn Gewichtsprozent zugemischt wird.

5. Elektrostatisch leitfähiger Belag in Form von Platten, Walzen, Bändern wie Transportbändern oder dergleichen, der als Masse vorwiegend Gießharz mit homogen zugemischtem Ruß aufweist und hergestellt ist nach einem Verfahren gemäß mindestens einem der Ansprüche 1 bis 4, dadurch gekennzeichnet, daß der Ruß in einem Gewichtsverhältnis von kleiner als zehn Prozent im Belag (9) vorhanden ist.

6. Belag gemäß Anspruch 5, dadurch gekennzeichnet, daß der Belag (9) eine Raumvorzugsrichtung aufweist, in der die elektrische Leitfähigkeit um etwa den Faktor 10 bis 10⁴ größer als in einer quer-, vorzugsweise senkrecht dazu verlaufenden Raumrichtung ist.

7. Belag gemäß Anspruch 5 oder 6, dadurch gekennzeichnet, daß der Ruß in einem Gewichtsverhältnis von kleiner als vier Prozent, vorzugsweise von kleiner als zwei Prozent, vorhanden ist.

8. Belag gemäß mindestens einem der Ansprüche 5 bis 7, dadurch gekennzeichnet, daß der Belag (9) hohlwalzenförmig ausgebildet und bei einem Presseur (5) vorgesehen ist.
